# EUROPEAN PATENT APPLICATION

(11) **EP 4 617 445 A1**
(43) Date of publication of application: **17.09.2025**
(21) Application number: 24162943.5
(22) Date of filing: 12.03.2024
(51) Int. Cl.: E04C 5/16, F16B 2/14, E04G 21/12, E04C 5/12, F16B 7/02, E04B 1/41, E04B 1/04

(54) **CONNECTOR FOR RELEASABLY ENGAGING A ROD**

(71) Applicant: Hilti Aktiengesellschaft, 9494 Schaan (LI)
(72) Inventor: Sanchez Lopez, Marco, 9000 St Gallen (CH); Bencsik, Gábor Menyhért, 6035 Ballószög (HU); Reumschuessel, Lukas, 9476 Weite (CH); Ruedisuehli, Ralph, 9470 Buchs (CH)
(74) Representative: Hilti Aktiengesellschaft Corporate Intellectual Property

(57) **Abstract**

Connector for releasably engaging a rod, comprising an engagement body having a cavity for receiving the rod, wherein the cavity has a taper, which converges towards an insertion opening, gripping segments for gripping the rod, which are arranged within the cavity, a spring for biasing the gripping segments towards the taper, a cap sleeve, which is aligned with the cavity of the engagement body, so that the rod can be passed through the cap sleeve into the cavity, a release member, which comprises a flange that is arranged between the cap sleeve and the engagement body, and which further comprises a pusher collar that projects from the flange into the cavity of the engagement body for pushing the gripping segments away from the taper of the engagement body, so as to release the gripping segments from gripping the rod. The connector further comprises a bridge, which extends between the engagement body and the cap sleeve so as to connect the cap sleeve and the engagement body, wherein the bridge penetrates through the release member.

## Description

The invention relates to a connector for releasably engaging a rod, in particular for providing a tensile connection between two timber columns, according to the preamble of claim 1. The invention furthermore relates to a connector assembly comprising such a connector.

WO23277706 A1 describes a connector for releasably engaging a rod, which is used for connecting timber structures, in particular columns. The connector is provided on a first column, and the rod provided on a second column. The connector is releasable, which allows disassembly of the timber structure, but also craning of the column that carries the connector.

It is an object of the invention to provide a connector for releasably engaging a rod which is, whilst being easy to produce, particularly easy to operate and/or particularly well-performing.

This object is achieved by a connector according to claim 1. Dependent claims refer to preferred embodiments of the invention

According to the invention, there is provided a connector for releasably engaging a rod, comprising an engagement body having a cavity for receiving the rod, and an insertion opening leading into the cavity, wherein the cavity has a taper, which converges towards the insertion opening, at least one gripping segment for gripping the rod, which is arranged within the cavity of the engagement body, a spring for biasing the at least one gripping segment towards the taper, a cap sleeve, which is aligned with the cavity of the engagement body, so that the rod can be passed through the cap sleeve into the cavity of the engagement body, and a release member, which comprises a flange that is arranged between the cap sleeve and the engagement body, and which further comprises a pusher collar that projects from the flange into the cavity of the engagement body for pushing the at least one gripping segment away from the taper of the engagement body, so as to release the at least one gripping segment from gripping the rod, characterized in that the connector further comprises at least one bridge, which extends between the engagement body and the cap sleeve so as to connect the cap sleeve to the engagement body, wherein the bridge penetrates through the release member.

Accordingly, the connection between the cap sleeve and the engagement body is realized by means one or more bridges, wherein each of the bridges is led through the flange of the release member, namely through a respective through hole provided in the flange. In contrast to a connection that is realized by means of a tubular housing that surrounds the flange, such e.g. described in WO23277706 A1, the present design allows comparatively unobstructed access of the flange in situations when it is intended to operate the release member. In particular, access can be realized in comparatively angular-independent manner. Accordingly, adjustment effort during installation and/or operational effort during release operations can be reduced. In particular, the inward offset (with respect to the circumference of the flange) of the at least one bridge allows to operate the release member by means of a U-shaped release wedge, e.g. as described further below, which can further reduce operational effort.

The rod is preferably a metal rod, more preferably a steel rod. The engagement of the rod is effected by at least one gripping segment (preferably by three of them), which is arranged within the engagement body, and which is wedged against the rod by the taper provided within the cavity when the rod is pulled out of the engagement body via the insertion opening. The spring is intended for biasing the at least one gripping segment towards the taper, in particular against the taper, so as provide initial engagement of the rod, when the at least one gripping segment tends to be moved away from the taper, e.g. under the influence of gravity or/and of the rod being inserted into the cavity. Preferably, the taper converges conically towards the insertion opening. In particular, the spring is a compression spring. In particular, the spring abuts, preferably directly, against the at least one gripping segment and/or it abuts, preferably directly, against the engagement body, in particular against a bottom thereof.

The bottom of the engagement body and the insertion opening, respectively, are in particular arranged at opposite ends of the engagement body. The insertion opening faces towards the cap sleeve. The cap sleeve, in particular a through hole provided therein, is aligned with the cavity, so that the straight rod may rest both within the cap sleeve and within the cavity.

The release member is intended to release the engagement of the rod provided by the at least one gripping segment by pushing the at least one gripping segment away from the taper. For doing so, the release member comprises the pusher collar that is intended to abut, preferably directly, against the at least one gripping segment. If more than one gripping segment is provided, the gripping collar is preferably intended to abut, preferably directly, against all of the gripping segments. The pusher collar might be a massive ring. In other embodiments, the pusher collar might consist of one or more segments. The pusher collar thus might also have a crown-shape. For operating the pusher collar, i.e. for displacing the pusher collar towards the at least one gripping segment, the flange is provided, which radially projects from the pusher collar, wherein the flange is intended to be acted against by a release body, such as a wedge or a tool, which release body is preferably pushed between the flange and the cap sleeve so as to abut against both the flange and the cap sleeve. Preferably, the pusher collar and the flange are monolithic.

Preferably, the at least one bridge and a corpus of the engagement body are monolithic. This can be e.g. advantageous in view of robustness and manufacturing. If a plurality of bridges is provided, it is preferred that each one of them and the corpus are monolithic. The corpus is preferably sleeve-shaped and it houses the cavity. The bottom of the engagement body and the corpus are preferably non-monolithic. For example, the bottom might be connected to the corpus by a screwed connection, in particular including an external thread provided on the bottom and an internal thread provided on the corpus.

As already hinted at above, the connector preferably comprises at least two or three bridges, wherein each of the bridges extends between the engagement body and the cap sleeve so as to connect the cap sleeve to the engagement body, wherein each of the bridges penetrates through the release member, preferentially through the flange of the release member. If more than one bridge is provided, the flange has preferably one through hole per bridge, through which the respective bridge is led. However, in other embodiments, though holes within the flange might also merge into one another. Providing a plurality of bridges might provide particularly strong connections at low effort.

Advantageously, each of the bridges has a threaded segment, wherein the cap sleeve is threaded onto the threaded segments. Such a threaded connection might provide connection in particular easy manner and robust.

According to another preferred embodiment of the invention, the release member further comprises an outer collar, which projects from the flange, and which, preferably, surrounds the pusher collar. This outer collar can stiffen the flange when pushed against during release. Accordingly, particularly reliable operation can be achieved. The outer collar and the pusher collar project from the flange in the same (axial) direction, namely axially towards the engagement body, in particular towards the corpus thereof. Preferably, the outer collar is a massive ring. Preferably, the outer collar surrounds the engagement body, more preferably the corpus thereof. This can provide additional stiffening, in particular by abutment of the outer collar on the engagement body.

It is particularly preferred that the release member further comprises a rear collar, which projects from the flange in the opposite direction as the pusher collar does. The rear collar and the pusher collar thus project into opposite directions. The rear collar can provide additional stiffening, in particular in pick-up craning situations. Preferably, the rear collar is a massive ring. Additional stiffening radially extending ribs can be provided between the flange and the rear collar.

The invention also relates to a connector assembly comprising the described connector, and, as already hinted at above, a U-shaped release wedge intended to be inserted, in particular radially inserted, between the flange and the cap sleeve, so as to wedge the pusher collar that projects from the flange against the at least one gripping segment. A U-shaped release wedge can provide particularly easy positioning and a particularly reliable seat at particular little effort. In particular, a U-shaped release wedge can have two chamfered legs, which form wedges intended to be inserted between the flange and the cap sleeve, wherein the legs are interconnected to give the U-shape. In particular, the U-shaped release wedge can consist of a metal material. The U-shaped release wedge can in particular be configured to encompass at least one of the bridges when inserted between the flange and the cap sleeve.

Advantageously, the connector assembly further comprises a handling fork having two prongs for gripping the U-shaped release wedge. The prongs are so configured that the U-shaped release wedge can be slid between the prongs. By means of the handling fork, the U-shaped release wedge held between the prongs can be inserted between the flange and the cap sleeve.

The invention also relates to a column-to-column arrangement comprising a bottom timber column, a top timber column, a connector for releasably engaging a rod, wherein the connector is fixed to the bottom timber column, and a rod extending from the top timber column into the connector. More preferably, the column-to-column arrangement comprises a bottom timber column, a top timber column, a bottom plate placed on the top face of the bottom timber column, and connected to the bottom timber column by means of screw fasteners, a connector for releasably engaging a rod, wherein the connector is fixed to the bottom plate, preferably by means of a threaded connection, a top plate placed on the bottom face of the top timber column and connected to the top timber column by means of screw fasteners, a rod extending from the top plate or/and from the top timber column into the connector, and a force bypass sleeve for transferring compressive force between the top plate and the bottom plate, which abuts on both the top plate and the bottom plate, wherein the connector is arranged withing the force bypass sleeve.

The arrangement thus comprises the bottom and top timber columns, which are arranged in generally vertically aligned relationship, with the top timber column being supported by the bottom timber column. Vertical downward forces are transferred from the top timber column to the adjoining top plate, from the top plate to the force bypass sleeve that abuts against the top plate, from the force bypass sleeve to bottom plate that abuts against the force bypass sleeve, and from the bottom plate to the adjoining bottom column. The connector is thus protected from the relatively high downward forces by means of the force bypass sleeve, which surrounds the connector. Tensile forces between the timber columns, on the other hand, which might e.g. arise during seismic, wind or fire situations, are transferred from the top column to the bottom column via the rod that is connected to the top column via the top plate, and which is gripped by the connector that is tensional secured to the bottom column via the bottom plate. In particular, at least one of the top plate and the bottom plate is a metal part, more preferably a steel part. The force bypass sleeve is preferably a metal part, more preferably a steel part. The rod is preferably a metal part, more preferably a steel part.

The arrangement might further comprise at least three, more preferably four props, for transferring compressive force between the top plate and the bottom plate, which extend between the bottom plate and the top plate, and which surround the force bypass sleeve. These props can provide off-centered load transfer, leading to particularly advantageous load paths when lateral load components arise, e.g. due to seismic or wind loads, at particularly low effort. Providing at least or four props in this connection allows providing particularly isotropic behavior at particularly low effort. Preferably, the props are metal parts, more preferably steel parts.

Preferentially, the props and the force bypass sleeve form a quincunx pattern, in particular when viewed from above with vertically orientated viewing direction. In particular, the bypass sleeve is arranged in the center of the quincunx pattern. The resulting high degree of symmetry can provide particular isotropic force transfer.

According to another advantageous embodiment of the invention, each one of the props plugs into the top plate. Each of the props might be tightly fixed to the bottom plate, e.g. by screwing. Providing a plug-in connection between the props and the top plate might permit particularly easy and fast assembly.

Features that are described here in relation to the connector can also be used in relation to the connector assembly and/or the column-to-column arrangement, and vice versa. Features that are described here in relation to with the connector assembly can also be used in relation to the column-to-column arrangement, and vice versa.

The invention is explained in greater detail below with reference to preferred exemplary embodiments, which are depicted schematically in the accompanying drawings. Individual features of the exemplary embodiments presented below can be implemented either individually or in any combination within the scope of the present invention.

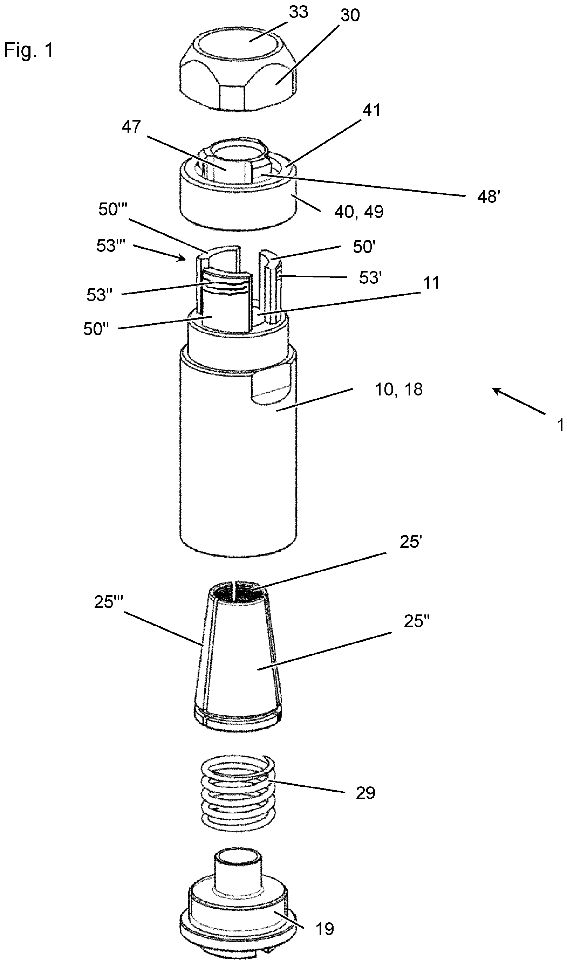

Figure 1 is an exploded view of a connector.

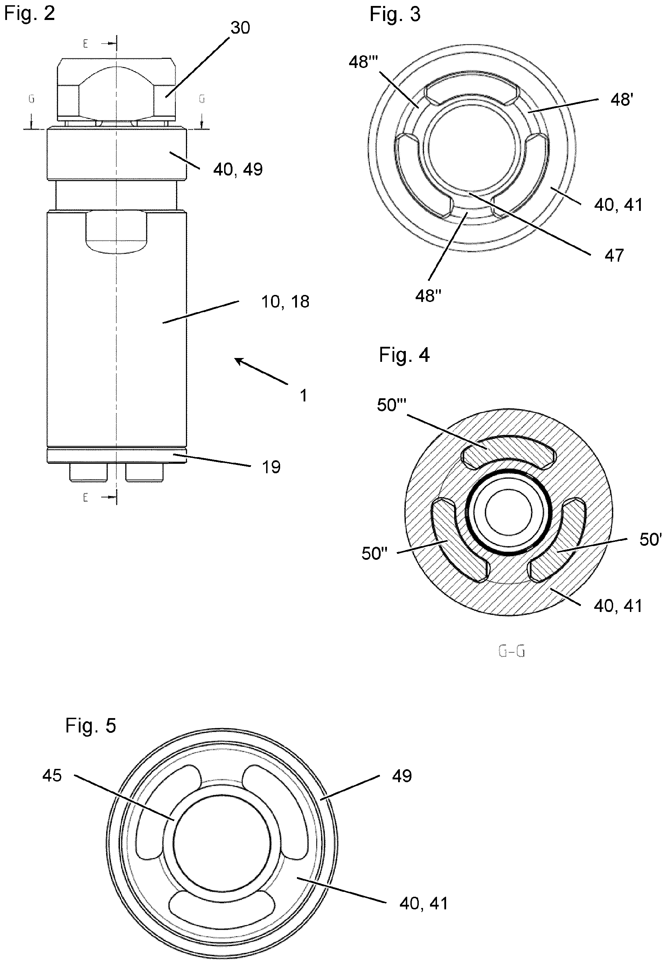

Figure 2 is a side view of the connector of figure 1.
Figure 3 is a top view (i.e. with viewing direction in rod insertion direction) of the release member of the connector of figure 1.
Figure 4 is a cross-sectional view G-G according to figure 2 of the connector of figure 1.
Figure 5 is a bottom view of the release member of the connector of figure 1.

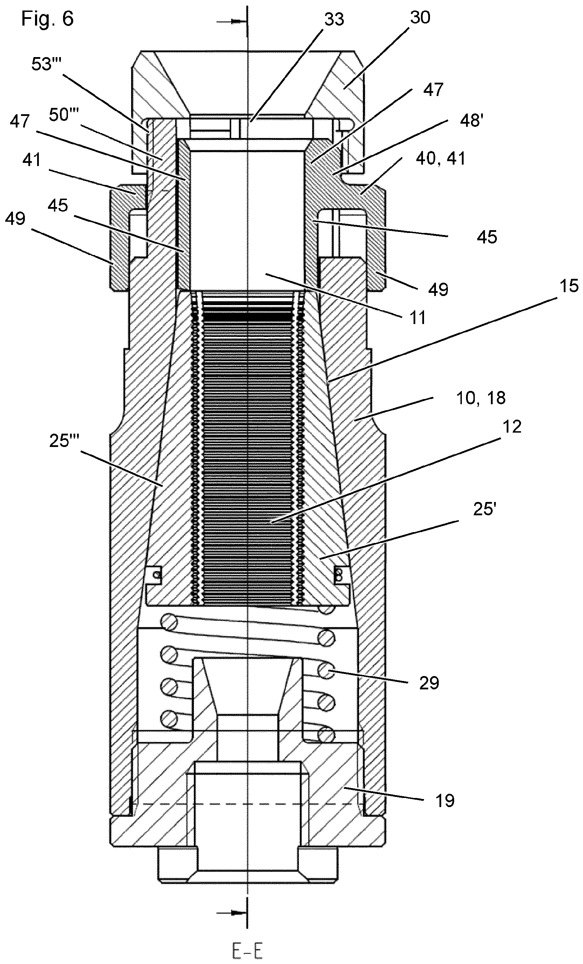

Figure 6 is a cross-sectional view E-E according to figure 2 of the connector of figure 1.
Figure 7 is a perspective view of a connector assembly including the connector of figure 1.
Figure 8 is a perspective view of the connector assembly of figure 7 at a later stage of the release process.
Figure 9 is an exploded perspective view of a column-to-column arrangement that comprises the connector of figure 1.
Figure 10 is an exploded side view of the column-to-column arrangement of figure 9.
Figure 11 is side view of the column-to-column arrangement of figure 9.
Figure 12 is modification of the column-to-column arrangement of figure 9, with the top timber column omitted.

The connector 1 shown in the figures comprises an engagement body 10, which has sleeve-like corpus 18, and an insertion opening 11 leading into a cavity 12 within the engagement body 10. Both the insertion opening 11 and the cavity 12 are provided on the corpus 18. A straight rod 5 can be inserted through the insertion opening 11 into the cavity 12. The cavity 12 has a taper 15 that narrows towards the insertion opening 11, i.e. at the taper 15, the cavity 12 becomes narrower as it approaches the insertion opening 11. The connector 1 further comprises gripping segments (three gripping segments 25', 25", 25‴ in the present embodiment, by way of example), which are arranged within the cavity 12. When the gripping segments 25', 25", 25‴ are axially pushed towards the insertion opening 11 against the taper 15, the taper 15 wedges the gripping segments 25', 25", 25‴ radially towards each other and towards the rod 5 arranged within the cavity 12. The gripping segments 25', 25", 25‴ and the taper 15 thus provide a self-locking mechanism for engaging the rod 5 when inserted into the cavity 12, which prevents the rod 5 from being pulled out of the cavity 12 via the insertion opening 11 in a direction that is directed opposite to the rod insertion direction.

The connector 1 further comprises a spring 29, which biases the gripping segments 25', 25", 25‴ axially towards the taper 15, in particular against the taper 15, in particular to counter gravitational forces acting on the gripping segments 25', 25", 25‴ and/or to provide initial engagement of the rod 5.

In the present embodiment, the spring 29 is, by way of example, a coil spring. The spring 29 rests on a bottom 19 of the engagement body 10, which bottom 19 is arranged opposite to the insertion opening 11 on the engagement body 10. In the present embodiment, the bottom 19 and the corpus 18 are non-integral. By way of example, the bottom 19 is threadedly connected to the sleeve-like corpus 18. The bottom 19 comprises a centering pin that projects towards the insertion opening 11, for centering the spring 29.

The connector 1 further comprises a cap sleeve 30 having a through hole 33. The cap sleeve 30, in particular the through hole 33 thereof, is aligned with the cavity 12 provided within the engagement body 10, in such a way that the straight rod 5 can be passed through the cap sleeve 30 having, namely the through hole 33 therein, into the cavity 12.

The connector 1 furthermore comprises a release member 40, which can mechanically act against the gripping segments 25', 25", 25‴ so as to release the engagement of the rod 5 within the cavity 12 that has been provided by the gripping segments 25', 25", 25‴ and the taper 15. This release member 40 can be moved axially to-and-fro and can in particular be pushed, against the force of the spring 29, against the gripping segments 25', 25", 25‴ so as to displace the gripping segments 25', 25", 25‴ away from the taper 15 so as to release rod engagement.

The release member 40 comprises a flange 41, in particular of generally circular circumference. This flange 41 is arranged, axially, between the cap sleeve 30 and the engagement body 10, and is intended to be acted against by a release tool, such as U-shaped release wedge 60, that is intended to be pushed radially between the flange 41 and the cap sleeve 30. The release member 40 further comprises a pusher collar 45, which is arranged on the flange 41, and which projects from the flange 41 into the cavity 12 of the engagement body 10. In the present embodiment, the flange 41 and the pusher collar 45 are monolithic, by way of example. The pusher collar 45 is intended to abut, preferably directly, against the gripping segments 25', 25", 25‴ for pushing the gripping segments 25', 25", 25‴ away from the taper 15 of the engagement body 10, so as to release the gripping segments 25', 25", 25‴ from gripping the rod 5.

In the present embodiment, the engagement body 10, the cap sleeve 30, the release member 40 and the gripping segments 25', 25", 25‴ are metal parts each.

The connector 1 further comprises three bridges 50', 50", 50''', each of the bridges 50', 50", 50‴ extending between the engagement body 10, namely the corpus 18 thereof, and the cap sleeve 30 so as to connect the cap sleeve 30 and the corpus 18 of the engagement body 10 with one another. Each of the bridges 50', 50", 50"'is tightly connected to the corpus 18. In the present embodiment, the bridges 50', 50", 50"'and the corpus 18 of the engagement body 10 are monolithic. The bridges project, axially, from the engagement body 10, namely the corpus 18 thereof, and form a crown on the engagement body 10, namely on the corpus 18 thereof. Each of bridges 50', 50", 50‴ has an externally threaded segment 53', 53", 53'", respectively, and the cap sleeve 30 is threadedly fastened to these threaded segments 53', 53", 53‴ by means of an internal thread provided on cap sleeve 30, wherein this internal thread projects into the through hole 33 of the cap sleeve 30.

Each of the bridges 50', 50", 50‴ penetrates through the flange 41 of the release member 40. In the present embodiment, the flange 41 has an individual through hole per bridge, such that each of the bridges 50', 50", 50‴ penetrates through a separate through hole in the flange 41. In other embodiments, some of the through holes might merge into one another. Since the bridges 50', 50", 50‴ all penetrate through the flange 41, the flange 41 provides a ring-shaped engagement area, which circumscribes all of the bridges 50', 50", 50''', and which allows engagement with the release tool, such as the U-shaped release wedge 60.

In the shown embodiment, the release member 40 further comprises an outer collar 49, which is arranged on the flange 41, and which projects from the flange 41, in the same direction as the pusher collar 45 does. The outer collar 49 surrounds the pusher collar 45, wherein the outer collar 49 and the pusher collar 45 are arranged co-axially. In the present embodiment, the flange 41 and the pusher collar 45 are monolithic, by way of example. The outer collar 49 surrounds the bridges 50', 50", 50", and at the free end of the outer collar 49, the outer collar 49 also surrounds the engagement body 10, namely the corpus 18 thereof. The outer collar 49 can thus stiffen the flange 41 and also guide the release tool to the intended ring-shaped engagement area on the flange 41.

In the shown embodiment, the release member 40 further comprises a rear collar 47, which is arranged on the flange 41, and which projects from the flange 41, in the opposite direction as the pusher collar 45 does. Accordingly, the rear collar 47 projects from the flange 41 towards the cap sleeve 30, and preferably into the cap sleeve 30. In the present embodiment, the rear collar 47 has generally the same inner diameter and outer diameter than has the pusher collar 45, but this exemplary only. The rear collar 47 and the pusher collar 45 are arranged co-axially. In the present embodiment, the flange 41 and the pusher collar 45 are monolithic, by way of example. In the shown example, stiffening ribs 48', 48", 48'", preferably three of them, are provided, which extend between the flange 41 and the rear collar 47. The rear collar 47 and the optionally provided stiffening ribs 48', 48", 48‴ might improve lateral load absorption, e.g. when craning the connector 1 and a timber column attached thereto by means of a rod inserted into the connector 1 and suspended from the crane.

A connector assembly comprises the described connector 1 a U-shaped release wedge 60. The release wedge is intended to be inserted between the flange 41 and the cap sleeve 30, so as to wedge the flange 41 together with the pusher collar 45 that is attached to the flange 41 against the gripping segments 25', 25", 25'". The U-shaped release wedge 60 comprises two interconnected legs, which legs are chamfered at their free ends. These chamfers cause the wedging action.

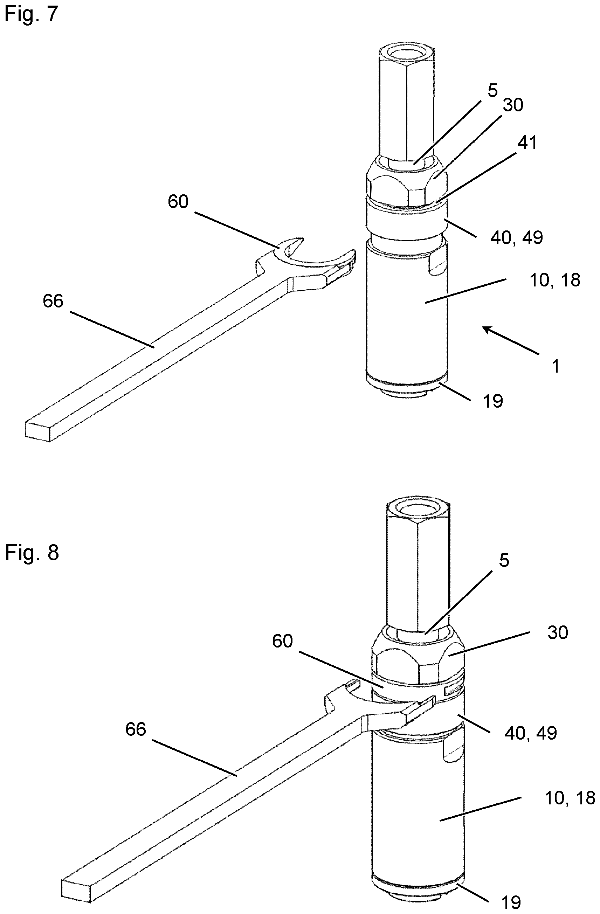

The connector assembly further comprises a handling fork 66 that has two prongs for gripping the U-shaped release wedge 60. The U-shaped release wedge 60 can be slid between the prongs, resulting in the configuration shown in figure 7, subsequently be pushed between the flange 41 and the cap sleeve 30 by pushing the handling fork 66, and then be left behind between the flange 41 and the cap sleeve 30 by sliding the handling fork 66 off the release wedge 60, resulting in the configuration shown in figure 8.

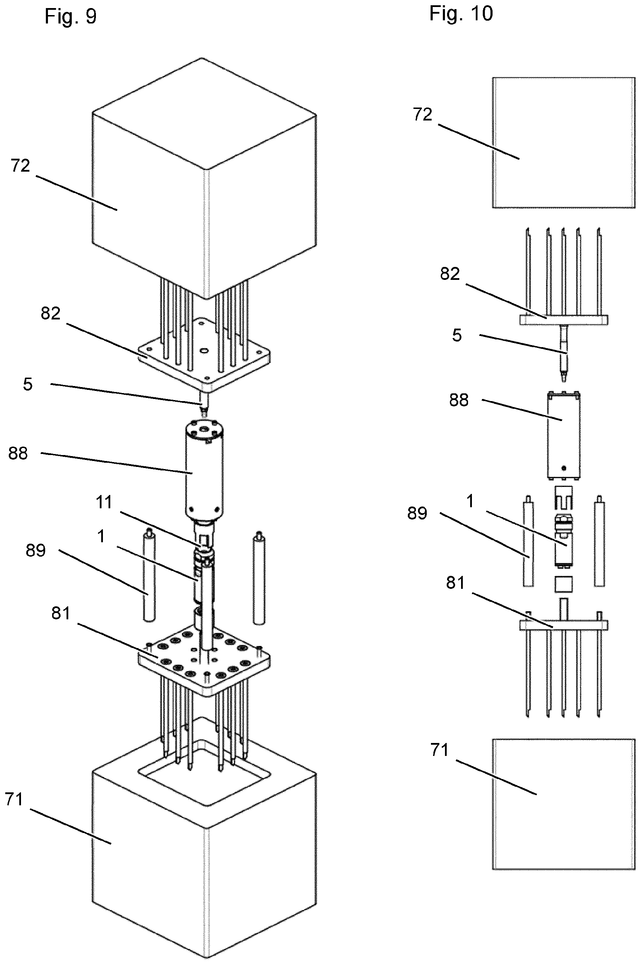

The figures 9, 10 and 11 show a timber column-to-column arrangement that includes the connector 1. The arrangement comprises a bottom timber column 71 and a top timber column 72, which are vertically aligned, and which are connected for tensile force transfer by means of the connector 1. The column-to-column arrangement comprises a bottom plate 81 (made of metal) that is placed on the top face of the bottom timber column 71 and that is connected to the bottom timber column 71 by means of screw fasteners. The connector 1 is fixed to the bottom plate 81, preferably by means of a threaded connection, such that the insertion opening 11 provided on the connector 1 faces away from the bottom plate 81. The arrangement further comprises a top plate 82 (made of metal) that is placed on the bottom face of the top timber column 72 and that is connected to the top timber column 72 by means of screw fasteners. The arrangement further comprises a rod 5 that is connected to the top plate, e.g. by a threaded connection, and that extends from the top plate 82 and thus from the top timber column 72 into the connector 1.

The arrangement also comprises a force bypass sleeve 88 for transferring compressive force between the top plate 82 and the bottom plate 81, which is plugged onto the connector 1, and which abuts on both the top plate 82 and the bottom plate 81. Not shown floor timber slabs might be positioned between the bottom timber column 71 and a top timber column 72, in particular a number of two floor timber slabs or a number of four floor timber slabs.

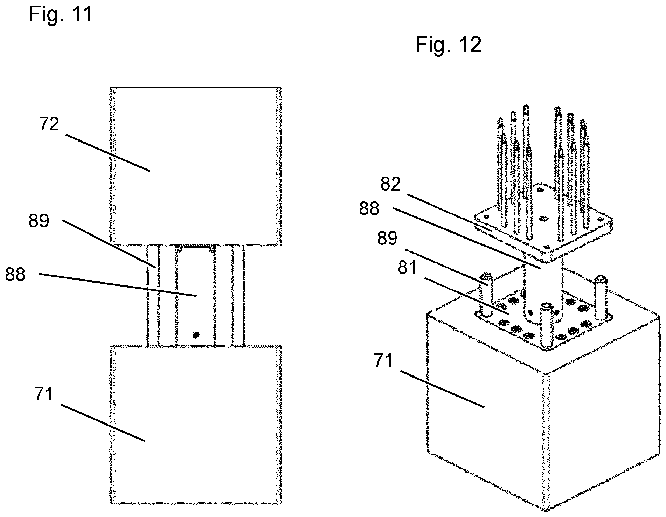

Optionally, the arrangement also comprises four props 89 for transferring compressive force between the top plate 82 and the bottom plate 81, which extend between the bottom plate 81 and the top plate 82, and which surround the force bypass sleeve 88. The props can also serve for positioning the above-mentioned timber slabs. The props 89 and the force bypass sleeve 88 all extend parallel to one another and preferably form a quincunx pattern. Each one of the props 89 is, e.g. threadedly, fixed on the bottom plate 81, and plugs into the top plate 82, in particular by a pin on the free end of each prop 89. The props 89 might, however, also be omitted in other embodiments. In yet other embodiments, the props 89 projecting from the bottom plate 81 might not extend all the way up to the top plate 82. In this case, an example of which is shown in figure 12, the props 89 might preferentially be mere positioning aids for floor timber slabs.

## Claims

1. Connector (1) for releasably engaging a rod (5), comprising
- an engagement body (10) having a cavity (12) for receiving the rod (5), and an insertion opening (11) leading into the cavity (12), wherein the cavity (12) has a taper (15), which converges towards the insertion opening (11),
- at least one gripping segment (25) for gripping the rod (5), which is arranged within the cavity (12) of the engagement body (10),
- a spring (29) for biasing the at least one gripping segment (25) towards the taper (15),
- a cap sleeve (30), which is aligned with the cavity (12) of the engagement body (10), so that the rod (5) can be passed through the cap sleeve (30) into the cavity (12) of the engagement body (10), and
- a release member (40), which comprises a flange (41) that is arranged between the cap sleeve (30) and the engagement body (10), and which further comprises a pusher collar (45) that projects from the flange (41) into the cavity (12) of the engagement body (10) for pushing the at least one gripping segment (25) away from the taper (15) of the engagement body (10), so as to release the at least one gripping segment (25) from gripping the rod (5),
**characterized in that**
- the connector further comprises at least one bridge (50), which extends between the engagement body (10) and the cap sleeve (30) so as to connect the cap sleeve (30) to the engagement body (10), wherein the bridge (50) penetrates through the release member (40).

2. Connector (1) according to claim 1,
**characterized in that**
the at least one bridge (50) and a corpus (18) of the engagement body (10) are monolithic.

3. Connector (1) according to any of the preceding claims,
**characterized in that**
the connector comprises at least two or three bridges (50), wherein each of the bridges (50) extends between the engagement body (10) and the cap sleeve (30) so as to connect the cap sleeve (30) to the engagement body (10), wherein each of the bridges (50) penetrates through the release member (40).

4. Connector (1) according to claim 3,
**characterized in that**
each of the bridges (50) has a threaded segment (53), wherein the cap sleeve (30) is threaded onto the threaded segments (53).

5. Connector (1) according to any of the preceding claims,
**characterized in that**
the release member (40) further comprises an outer collar (49), which projects from the flange (41), and which surrounds the pusher collar (45).

6. Connector (1) according to any of the preceding claims,
**characterized in that**
the release member (40) further comprises a rear collar (47), which projects from the flange (41) in the opposite direction as the pusher collar (45) does.

7. Connector assembly comprising a connector (1) according to any of the preceding claims, and a U-shaped release wedge (60) intended to be inserted between the flange (41) and the cap sleeve (30), so as to wedge the pusher collar (45) that projects from the flange (41) against the at least one gripping segment (25).

8. Connector assembly according to claim 6,
**characterized in that**
it further comprises a handling fork (66) having two prongs for gripping the U-shaped release wedge (60).
